# EUROPÄISCHE PATENTSCHRIFT

(11) **EP 2 944 170 B1**
(45) Veröffentlichungstag und Bekanntmachung des Hinweises auf die Patenterteilung: **12.08.2020**
(21) Anmeldenummer: 15163013.4
(22) Anmeldetag: 09.04.2015
(51) Int. Cl.: A01B 63/10, A01C 7/20

(54) **LANDWIRTSCHAFTLICHE VERTEILMASCHINE, INSBESONDERE SÄMASCHINE, UND VERFAHREN ZUR HÖHENVERSTELLUNG VON SÄSCHAREN**
AGRICULTURAL DISTRIBUTOR, ESPECIALLY A SOWING MACHINE, AND METHOD FOR ADJUSTING THE HEIGHT OF SEED COULTERS
ÉPANDEUR AGRICOLE, EN PARTICULIER SEMOIR, ET PROCÉDÉ DE RÉGLAGE EN HAUTEUR DES SOCS

(30) Priorität: 15.05.2014 DE 102014106889
(43) Veröffentlichungstag der Anmeldung: 18.11.2015
(73) Patentinhaber: Horsch Maschinen GmbH, 92421 Schwandorf (DE)
(72) Erfinder: Horsch, Philipp, 92421 Schwandorf (DE); Weitzer, Tobias, 92421 Schwandorf (DE)
(74) Vertreter: Benninger, Johannes

(56) Entgegenhaltungen:
- EP-A1- 0 032 742
- WO-A1-2012/110992
- DE-U1- 29 910 414
- GB-A- 2 513 928
- US-A- 5 497 837

## Beschreibung

Die vorliegende Erfindung betrifft eine landwirtschaftliche Verteilmaschine, insbesondere eine landwirtschaftliche Sämaschine mit einer quer zur Fahrtrichtung angeordneten Säscharanordnung mit den Merkmalen des unabhängigen Anspruchs 1. Die Erfindung betrifft zudem ein Verfahren zur gemeinsamen und gleichzeitigen Höhenverstellung einer Vielzahl von Säscharen mit den Merkmalen des unabhängigen Verfahrensanspruchs 12.

Eine Sämaschine mit Säscharanordnung ist bspw. durch die EP 1 060 649 A1 bekannt geworden. Hierbei ist an einem Schartragrohr über die Arbeitsbreite der Maschine in regelmäßigen Abständen zueinander eine Reihe von Säschare angeordnet. Die Höhen- bzw. Tiefenverstellung der Säscharanordnung in Bezug auf die Bodenoberfläche erfolgt linear mittels einer Ritzel-Zahnstangen-Vorrichtung. Derartige Ritzel-Zahnstangen-Verstellvorrichtungen haben sich jedoch in der Praxis als relativ aufwändig erwiesen, da zum einen sehr viele Teile benötigt werden, was erhebliche Baukosten verursacht. Zum anderen ist für einen Verstellvorgang Werkzeug erforderlich, was sich wiederum negativ auf den Bedienkomfort auswirkt. Darüber hinaus sind in der Regel mehrere solcher Ritzel-Zahnstangen-Vorrichtungen an einem Schartragrohr erforderlich, die jeweils wechselnd um einige Zentimeter verstellt werden müssen, so das ggf. an jeder Position mehrmals verstellt werden muss. Zudem ist somit ein schnelles Heben und Senken während einer Feldfahrt und somit eine automatische Tiefenanpassung verhindert.

Aus der EP 2 361 491 A1 geht ferner eine Sämaschine hervor, bei der die Säscharanordnung mittels einer Viergelenkanordnung an einer Rahmeneinheit angebunden ist. Das Verschwenken der Säscharanordnung erfolgt mittels eines hydraulisch arbeitenden Zylinders. Die hierfür eingesetzte Viergelenkanordnung weist eine Vielzahl beweglicher und aneinander gelagerter Teile auf, die jeweils verschmutzungsanfällig sind und einen gewissen Bauaufwand erfordern.

Die DE 199 54 423 A1 offenbart eine kombinierte bzw. integrierte landwirtschaftliche Bestellkombination, bestehend aus Kreiselegge, Nachlaufwalze und nachgeordneter Drillmaschine, wobei diese Teile über gelenkige Verbindungen in einer Weise miteinander gekoppelt sind, dass die Drillmaschine bei Bedarf über hydraulische Zylinder angehoben bzw. zur Einstellung der Arbeitstiefe der Drillscharen in ihrer Höhe gegenüber dem Boden verstellt werden kann.

Aus der DE 29 605 356 U1 ist weiterhin eine Sämaschine bekannt, die über ihren Rahmen starr an eine vorlaufende Bodenbearbeitungskombination angeschlossen ist. Die Bodenbearbeitungskombination umfasst eine Tiefenführungswalze und eine Kreiselegge. Der Rahmen ist mittels unterer und oberer Befestigungselemente mit dem Anbaublock der Kreiselegge starr verbunden. Weiterhin weist der Rahmen zwei Parallellenker auf, die an einem Befestigungsteil und an einem Arm angeordnet sind, wodurch eine Viergelenk-Führung für den Arm erreicht wird. Eine Fixierung der Parallellenkereinheit erfolgt über ein Spannschloss welches eine Einstellung der Arbeitstiefe der Säeinheit ermöglicht. Die parallel verlaufenden Lenker, die durch den Hubzylinder gehoben und gesenkt werden können, bilden eine herkömmliche Parallelogrammaufhängung.

Die US 2012/ 0 316 673 A1 offenbart schließlich eine Drillmaschine, der ein mobiles Fahrgestell oder ein Rahmen mit einem Zapfen und einer Kupplungsstruktur zum Verbinden der Drillmaschine mit einem Zugfahrzeug zugeordnet sein kann. Weiterhin umfasst die Drillmaschine einen Rahmen mit einem Hauptrahmenabschnitt und Flügelrahmenabschnitten. An dem Rahmen sind mehrere Verdichtungsräder und Furchenräder angeordnet. Das Anheben und Absenken der Flügelrahmenabschnitte erfolgt durch Hydraulikzylinder, die auf Schwenklagerungen wirken.

Die WO 2012/110992 A1 beschreibt eine Sämaschine mit mehreren in Reihen angeordneten Säelementen. Die Säelemente sind über einen Träger und eine parallelogrammartige Halterung an Stangen befestigt. Zur vertikalen Bewegung der Säelemente ist eine Verstelleinheit vorgesehen, welche sich aus einem Schlitten, einer Führung sowie weiteren einzelnen Elementen zusammensetzt und mit den Stangen verbunden ist. Zusätzlich ist ein Zylinder vorgesehen, welcher eine vertikale Bewegung der Säelemente nach unten bzw. nach oben bewirkt.

Ein grundsätzlicher Nachteil aller bisher bekannten Säscharanordnungen besteht darin, dass diese für die Realisierung der gewünschten Verstellfunktionen zum gemeinsamen Heben und Senken der Säschare jeweils eine Vielzahl von Gelenken, Drehpunkten und Stellgliedern erfordern. Dies wirkt sich jedoch zum einen negativ auf die Kosten aus. Zudem sind derartige Anordnungen relativ wartungsintensiv, da die Drehpunkte jeweils einem unvermeidlichen Verschleiß unterliegen und regelmäßig gewartet und/oder gegen Neuteile ausgetauscht werden müssen.

Angesichts der sich aus dem Stand der Technik ergebenden Nachteile kann es als das vorrangige Ziel der vorliegenden Erfindung angesehen werden, eine schnell und einfach höhenverstellbare Säscharanordnung für eine landwirtschaftliche Verteil- oder Sämaschine zur Verfügung zu stellen, die mit nur wenigen Teilen auskommt und die im laufenden Betrieb eine nur geringe Verschmutzungs- und/oder Verschleißanfälligkeit zeigt.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen. Zur Erreichung des genannten Ziels schlägt die Erfindung eine landwirtschaftliche Verteilmaschine vor, insbesondere eine Sä- und/oder Drillmaschine, die mit wenigstens einer zentralen Versorgungs- und Fördereinheit für das Verteil- oder Saatgut und einer Vielzahl von Säschare ausgestattet ist, welche nebeneinander an wenigstens einer gemeinsamen, quer zu einer Vorschub- oder Fahrtrichtung angeordneten Schartrageinrichtung befestigt und förder- sowie materialflusstechnisch mit der wenigstens einen zentralen Versorgungs- und Fördereinheit gekoppelt sind. Erfindungsgemäß ist die wenigstens eine Schartrageinrichtung über eine höhenverstellbare Aufhängung mit einem Rahmen der Verteilmaschine bzw. der Sä- oder Drillmaschine verbunden. Außerdem ist vorgesehen, dass die höhenverstellbare Aufhängung eine Linearführungseinheit umfasst, die eine linear verstellbare Verbindung zwischen dem Rahmen der Verteilmaschine bzw. der Sä- oder Drillmaschine und der Schartrageinrichtung mit der Vielzahl von daran befestigten Säscharen bildet.

Bei der erfindungsgemäß ausgestatteten Maschine ist die Säscharanordnung nur noch mittels wenigstens einer linear beweglichen Verstellanordnung mit dem Tragerahmen oder Maschinenrahmen der Sä- oder Verteilmaschine gekoppelt bzw. verbunden. Diese Linearführungseinheit kann insbesondere durch zwei Hydraulikzylinder bzw. Stellglieder gebildet sein, die eine vertikale oder schräg zu einer Vertikalen geneigte Verstellbarkeit der gesamten Schartrageinheit erlaubt, ohne dass hierzu weitere Gelenkanordnungen, Parallelogrammgestänge oder dergleichen Aufhängungsanordnungen vonnöten wären. Um seinen Zweck in optimaler Weise zu erfüllen, kann das Stellglied bzw. die Linearführungseinheit vorzugsweise derartig konzipiert und dimensioniert sein, dass es alle auf die Säscharanordnung einwirkenden Kräfte, hervorgerufen z.B. durch Schardruck etc., problemlos und ohne Verformungen oder größere Durchbiegungen aufnehmen kann. Hierdurch ergibt sich eine Vielzahl von Vorteilen, da bspw. keine separaten Gelenke und Drehpunkte mehr benötigt werden. Ebenso muss gerade bei Dreipunktgeräten oder bei aufgesetzten Geräten, z.B. auf Kreiseleggen o.ä., nur noch die Säscharanordnung verschwenkt bzw. gehoben und gesenkt werden, nicht mehr wie bisher die Einheit, bestehend aus Sätank und Säscharanordnung, wie dies bspw. bei der Anordnung gemäß DE 199 54 423 A1 der Fall ist. Eine Verstellung der Arbeitstiefe ist ohne weiteres möglich, bspw. durch Einlegen von sog. Alu-Clips, mittels geeigneten Wegmesssystemen o. dgl., oder anderen Hubbegrenzungen an den Stellgliedern. Auch ist es somit möglich, die Arbeitstiefe während der Fahrt zu verstellen, um somit bspw. die Möglichkeit zu schaffen, die Arbeitstiefe über externe Messparameter wie GPS-Signale oder anderen Schlagkarten zu regeln.

Die Linearführungseinheit kann solchermaßen orientiert sein, dass sie eine ungefähr vertikal oder geneigt zur Vertikalen orientierte Verstellrichtung aufweist. Darüber hinaus liegt diese Verstellrichtung bzw. die Bewegungslinie der Verstellvorgänge für das Heben und Senken innerhalb einer vertikalen Ebene, die parallel zur Vorschub- oder Fahrtrichtung der Verteilmaschine angeordnet ist. Diese Ebene sowie die vertikale oder innerhalb dieser Ebene leicht geneigte Verstellrichtung definieren die Bewegungsrichtungen zur Höheneinstellung der Säschare über die verstellbare bzw. heb- und senkbare Schartrageinrichtung. Da weitere Aufhängungselemente neben der Linearführungseinheit nicht erforderlich sind, muss diese ausreichend steif konstruiert sein und bei den in der Praxis auftretenden Belastungen ausreichend stabil gegen Verformungen und Durchbiegungen sein.

Die Linearführungseinheit umfasst erfindungsgemäß zwei Linearantriebe, die mit in etwa parallelen Längserstreckungsrichtungen und jeweiligen Verstellrichtungen zwischen dem Rahmen der Verteilmaschine und der Schartrageinrichtung angeordnet sind und diese verstellbar miteinander verbinden. Typischerweise sind jedoch zwei gleichartige und symmetrisch aufgebaute Linearantriebe vorhanden, was den mechanischen Aufbau und die gleichmäßige Kräfteverteilung erleichtert.

Erfindungsgemäß bildet bei der landwirtschaftlichen Verteilmaschine die erwähnte Linearführungseinheit das weitgehend alleine tragende Verbindungsteil zwischen dem Rahmen der Verteilmaschine und der auf diese Weise gehaltenen, geführten und in der Höhe verstellbaren Schartrageinrichtung, die damit auf stabile und weitgehend spielfreie Weise geführt, gehalten und in gewünschter Höhe einstellbar ist. Erfindungsgemäß sind damit außer der Linearführungseinheit, gebildet durch zwei Linearantriebe, keine weiteren tragenden Verbindungsteile zwischen dem Rahmen der Verteilmaschine und der Schartrageinrichtung vorgesehen.

Die Linearführungseinheit kann bspw. in einer Weise ausgestaltet sein, dass jeder der wenigstens zwei Linearantriebe jeweils durch doppelt wirkende Zylinderantriebe gebildet ist, welche durch fluidische Druckbeaufschlagung in jeweiliger Längsrichtung verstellbar sind. Als Linearantriebe bzw. Zylinderantriebe können jeweils hydraulische oder pneumatische Verstellzylinder zum Einsatz kommen, mit denen die Höheneinstellung ermöglicht ist. Je nach Baugröße der eingesetzten Zylinder und deren Durchmesser kann es ausreichen, mit zwei solchen parallel und synchron verstellbaren Zylindern eine ausreichend stabile verstellbare Aufhängung für die Schartrageinheit zu schaffen. Auch können die Linearantriebe durch elektrisch betriebene Antriebe realisiert sein, bspw. durch Zahnstangenantriebe, auf die ein Elektromotor wirkt, der ein Ritzel antreibt. Auch andere Bauarten von Linearantrieben sind denkbar.

Vorzugsweise weist jeder der wenigstens zwei Linearantriebe jeweils ein Tauchrohr oder einen Zylinder und ein darin in Längsrichtung mittels fluidischer Druckbeaufschlagung verschiebbares und in seiner Lage fixierbares Standrohr bzw. einen darin in Längsrichtung mittels fluidischer Druckbeaufschlagung verschiebbaren und in seiner Lage fixierbaren Kolben auf. Hierbei können die Tauchrohre oder Zylinder ortsfest und in definiertem Winkel ihrer Längsachse am Rahmen der Verteilmaschine fixiert sein. Wahlweise ist auch eine Bauweise in umgekehrter Anordnung möglich, bei der die Standrohre oder Kolben ortsfest an der Maschine angeordnet sind, während die Zylinder oder Tauchrohre beweglich verschiebbar sind und die Schartrageinheit nach oben und unten bewegen. Wichtig ist bei allen Varianten, dass ein Teil fest an der Maschine verankert ist, während das jeweils andere Teil relativ dazu beweglich ist. Grundsätzlich können nahezu beliebige Linearantriebe zum Einsatz kommen, z.B. elektrische Antriebe o.ä. Wahlweise können die Tauchrohre oder Zylinder auch jeweils in ihrer Neigung gegenüber der Vertikalen einstellbar und/oder in ihrer Höhenposition am Rahmen der Verteilmaschine justierbar und in der eingestellten Position feststellbar sein, wodurch eine flexiblere Einstellung und Variation der Verstellmöglichkeiten geschaffen ist, bspw. bei unterschiedlich dimensionierten Schareinheiten, wenn diese bspw. für unterschiedliches Verteilgut und/oder unterschiedliche Bodenverhältnisse oder Einsatzbedingungen auswechselbar sind.

Die typischerweise wenigstens zwei Standrohre oder beweglichen Kolben (mindestens jedoch ein Standrohr oder Kolben) sind demzufolge mit ihren jeweiligen unteren Befestigungen mit der Schartrageinheit verbunden und tragen diese höhenverstellbar und verbinden sie mit dem Rahmen der Verteilmaschine. Die genannte Schartrageinheit kann bspw. durch wenigstens ein durchgängiges Querrohr oder einen starren Querträger oder ein anderes stabiles und biegesteifes Trägerelement gebildet sein.

Die vorliegende Erfindung ermöglicht eine wartungsarme und verschleißfeste Aufhängung einer Vielzahl verstellbarer Säschare an einer landwirtschaftlichen Verteilmaschine, die zudem sehr schnell gemeinsam während einer Feldfahrt verstellt werden können, bspw. auf Basis extern gewonnener Messwerte wie z.B. von GPS-Daten o. dgl. Parameter. Diese Verstellung kann auch Basis der Messwerte oder in Kennfeldern abgelegten Parameter wahlweise auch automatisiert erfolgen.

Es sei darauf hingewiesen, dass die erfindungsgemäße landwirtschaftliche Verteilmaschine, die bspw. durch eine Sä- und/oder Drillmaschine gebildet sein kann, normalerweise genau eine zentrale Versorgungs- und Fördereinheit für das Verteil- oder Saatgut und zur Versorgung der Vielzahl von Säschare mit dem Verteil- oder Saatgut aufweist. Das schließt jedoch nicht aus, dass zwei oder mehrere solcher Versorgungs- und Fördereinheiten für das Verteil- oder Saatgut vorhanden sein können, was z.B. bei einer großen Vielzahl von Säscharen sinnvoll sein kann. Außerdem ist oben definiert, dass die Vielzahl von Säscharen nebeneinander an wenigstens einer gemeinsamen, quer zu einer Vorschub- oder Fahrtrichtung angeordneten Schartrageinrichtung befestigt und förder- sowie materialflusstechnisch mit der wenigstens einen zentralen Versorgungs- und Fördereinheit gekoppelt sind, was jedoch nicht ausschließt, dass bspw. auch zwei solcher Schartrageinrichtungen vorhanden sein können, die fluchtend oder leicht versetzt nebeneinander angeordnet sein können, was wiederum bei Überschreitung bestimmter Arbeitsbreiten sinnvoll sein kann. In diesem Fall sind somit auch jeweils für jede separate Schartrageinrichtung auch separate Linearführungseinheiten zu deren Höhenverstellung erforderlich, die jedoch normalerweise parallel zueinander in der Höhe verstellt werden, weil keine unterschiedlichen Höheneinstellungen sinnvoll sind.

Weiterhin umfasst die vorliegende Erfindung ein Verfahren zur gemeinsamen und gleichzeitigen Höhenverstellung einer Vielzahl von Säscharen, die nebeneinander an einer gemeinsamen, quer zu einer Vorschub- oder Fahrtrichtung angeordneten Schartrageinrichtung einer landwirtschaftliche Verteilmaschine, insbesondere einer Sä- und/oder Drillmaschine, befestigt sind. Hierbei sind die Säschare jeweils mit wenigstens einer zentralen Versorgungs- und Fördereinheiteinheit für das Verteil- oder Saatgut fördersowie materialflusstechnisch gekoppelt. Zudem ist die wenigstens eine Schartrageinrichtung über eine höhenverstellbare Aufhängung mit einem Rahmen der Verteilmaschine verbunden. Die höhenverstellbare Aufhängung umfasst wenigstens eine Linearführungseinheit mit den Merkmalen des kennzeichnenden Teils des Anspruchs 12, die eine linear verstellbare Verbindung zwischen dem Rahmen der Verteilmaschine und der Schartrageinrichtung mit der Vielzahl von daran befestigten Säschare bildet. Außerdem kann die Linearführungseinheit eine ungefähr vertikal oder geneigt zur Vertikalen orientierte und innerhalb einer vertikalen, parallel zur Vorschub- oder Fahrtrichtung der Verteilmaschine angeordneten Ebene liegende Verstellrichtung zur Höheneinstellung der Säschare über die verstellbare bzw. heb- und senkbare Schartrageinrichtung vorsehen. Mit diesem erfindungsgemäßen Verfahren sind schnelle und exakte Verstellvorgänge zum Heben und Senken einer Schartrageinheit und damit zur Einstellung der Arbeitstiefe einer Vielzahl von an der Schartrageinheit angelenkten Säschare zu gewährleisten.

Wahlweise können bei dem erfindungsgemäßen Verfahren die Positionen der Linearführungseinheit und damit die Arbeitshöhe der Schartrageinheit mit den daran angeordneten Säscharen manuell eingestellt werden, was problemlos während der Feldfahrt erfolgen kann. Es ist jedoch auch möglich, die Positionen der Linearführungseinheit und damit die Arbeitshöhe der Schartrageinheit mit den daran angeordneten Säscharen automatisch in Abhängigkeit von Arbeitsparametern einzustellen, z.B. über GPS oder sonstige Sensorik, und dies ebenfalls während der Feldfahrt, so dass eine automatische Höheneinstellbarkeit und damit eine automatische Anpassbarkeit der gewünschten bzw. jeweils sinnvollen Arbeitstiefe der Säschare ermöglicht ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante einer erfindungsgemäßen landwirtschaftlichen Verteilmaschine, hier einer Sämaschine.
Fig. 2 zeigt eine schematische Seitenansicht der Sämaschine gemäß Fig. 1.
Fig. 3 zeigt eine weitere Perspektivansicht der Sämaschine gemäß Fig. 1.
Fig. 4 zeigt in zwei schematische Seitenansichten verschiedene Höheneinstellungen der Säschare der Sämaschine gemäß Fig. 1 bis Fig. 3.

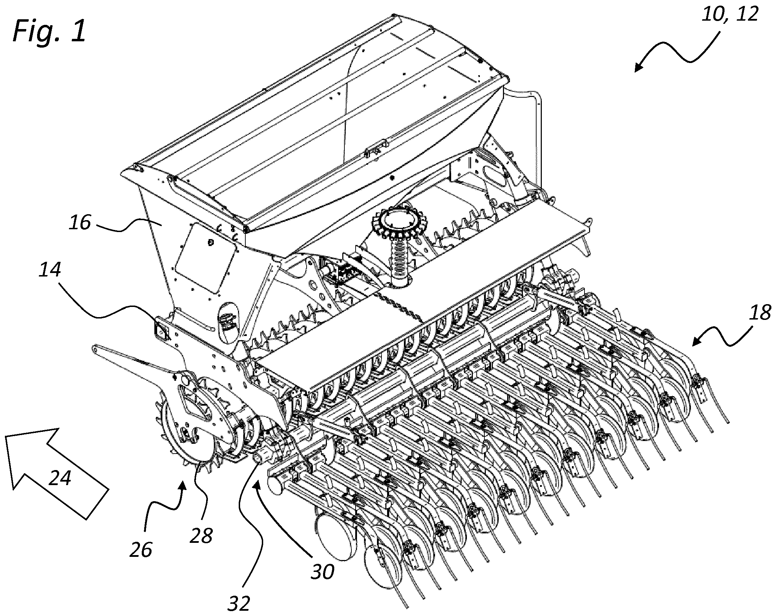

Für gleiche oder gleich wirkende Elemente der Erfindung werden in den Figuren 1 bis 4 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

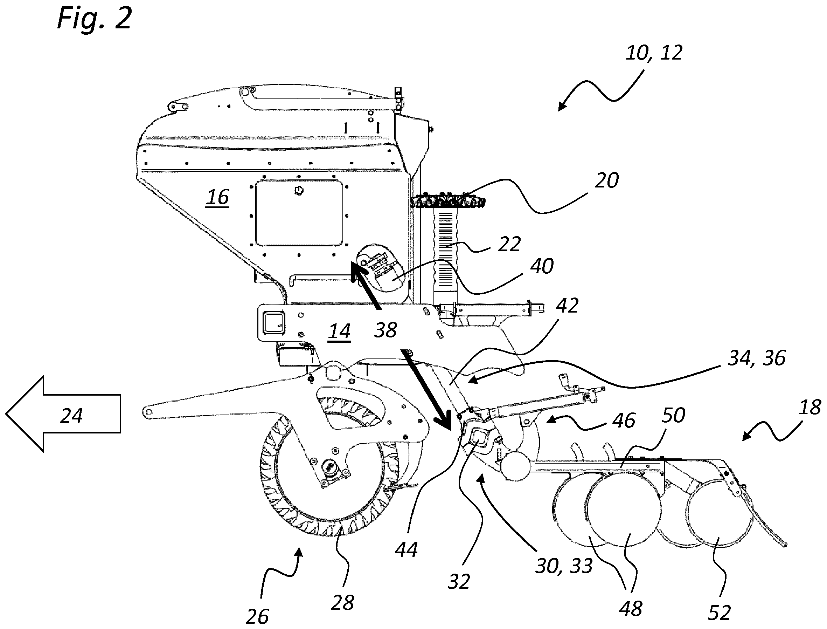

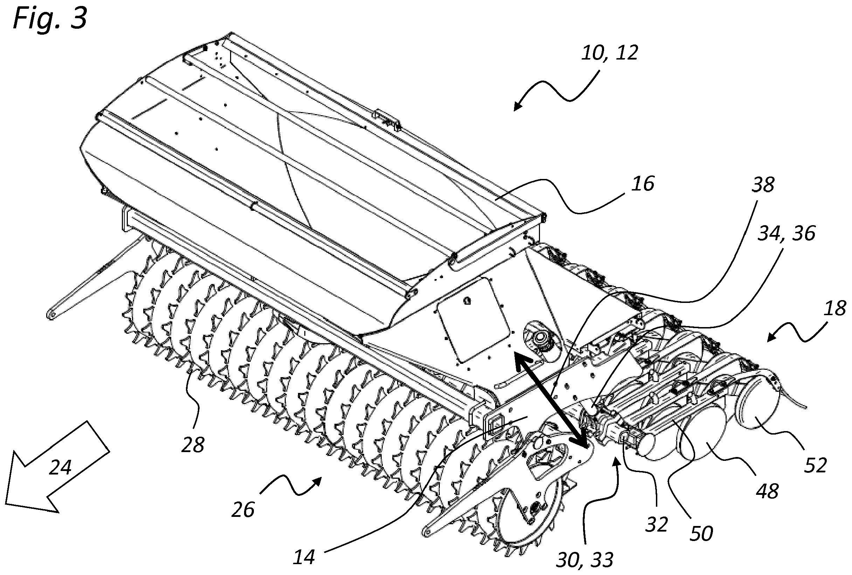

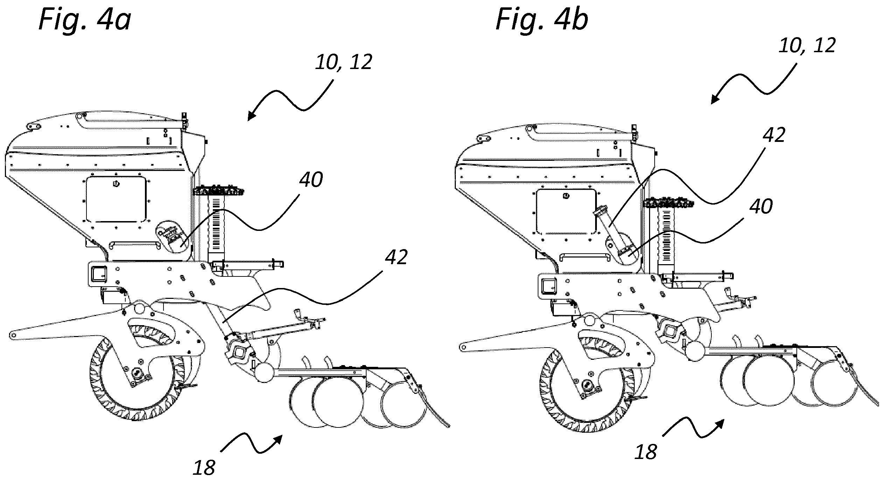

Die schematische Perspektivansicht der Fig. 1 zeigt eine Ausführungsvariante einer erfindungsgemäßen landwirtschaftlichen Verteilmaschine 10, hier am Beispiel einer Sämaschine 12. Die Fig. 2 zeigt eine schematische Seitenansicht dieser Sämaschine, während die Fig. 3 eine weitere Perspektivansicht der Sämaschine zeigt. Der grundsätzliche Aufbau einer derartigen Sämaschine geht aus den Figuren 1 bis 3 deutlich hervor, während die wesentlichen Aspekte der vorliegenden Erfindung - die einfache und exakte Verstellbarkeit der Säschare durch Höhenverstellung eines gemeinsamen Scharträgers - besonders anhand der Fig. 2 sowie der beiden schematischen Seitenansichten der Figuren 4a und 4b verdeutlicht werden können.

Die in den Figuren 1 bis 4 gezeigte landwirtschaftliche Verteilmaschine 10 wird hier am Ausführungsbeispiel einer Sämaschine 12 gezeigt, die einen Rahmen 14 aufweist, der für eine Zugverbindung oder eine Anbauverbindung zu einer landwirtschaftlichen Zugmaschine oder Kreisegge oder sonstige Arbeitswerkzeuge (nicht gezeigt) vorbereitet ist. Am Rahmen 14 ist ein großer Zentraltank 16 befestigt, der das Saatgut aufnimmt, das über Förder- und Leitungsverbindungen zu der Vielzahl von parallel angeordneten Säscharen 18 befördert wird. Zur Verteilung des Saatgutes ist u.a. ein zentraler Sternverteiler 20 vorgesehen, der über eine vertikale Steigleitung - hier ein Wellrohr 22 - beschickt wird, und vom dem eine Vielzahl von Schlauchleitungen zu den Säscharen 18 führen; diese Schlauchleitungen sind hier jedoch nicht dargestellt. Am Rahmen 14 ist unterhalb des Zentraltanks 16 eine horizontal angeordnete und quer zur Fahrtrichtung 24 liegende Zerkleinerungswelle 26 mit einer Vielzahl von rotierenden scheibenförmigen Zerkleinerungswerkzeugen 28 angeordnet, die den Säscharen in Fahrtrichtung 24 vorgeordnet ist.

Die Säschare 18 sind jeweils nebeneinander an einer gemeinsamen, quer zur Vorschub- oder Fahrtrichtung 24 angeordneten Schartrageinrichtung 30 befestigt und fördersowie materialflusstechnisch mit der zentralen Versorgungs- und Fördereinheit mit dem Zentraltank 16 und dem Sternverteiler 20 gekoppelt. Die Schartrageinheit 30 ist im gezeigten Ausführungsbeispiel durch ein durchgängiges Querrohr 32 gebildet, kann aber grundsätzlich durch jede Art geeigneter starrer Querträger oder andere stabile und ausreichend biegesteife Trägerelemente gebildet sein.

Wie es insbesondere die Fig. 2 erkennen lässt, ist die Schartrageinrichtung 30 über eine höhenverstellbare Aufhängung 33 mit dem Rahmen 14 der Verteilmaschine 10 oder Sämaschine 12 verbunden. Die höhenverstellbare Aufhängung 33 umfasst eine Linearführungseinheit 34 oder Linearführungseinheiten 34, die eine linear verstellbare Verbindung zwischen dem Rahmen 14 der Verteilmaschine 10 und der Schartrageinrichtung 30 mit der Vielzahl von daran befestigten Säscharen 18 bilden.

Wie es die perspektivische Darstellung der Fig. 1 erkennen lässt, umfasst die Linearführungseinheit 34 zwei Linearantriebe 36, die mit ihren parallelen Längserstreckungsrichtungen und jeweiligen Verstellrichtungen 38 zwischen dem Rahmen 14 der Verteilmaschine 10 und der Schartrageinrichtung 30 angeordnet sind und diese verstellbar miteinander verbinden. So kann die Linearführungseinheit 34 bspw. in einer Weise ausgestaltet sein, dass jeder der wenigstens zwei Linearantriebe 36 jeweils durch doppelt wirkende Zylinderantriebe gebildet ist, welche durch fluidische Druckbeaufschlagung in jeweiliger Längsrichtung 38 verstellbar sind.

Als Linearantriebe 36 bzw. Zylinderantriebe können jeweils hydraulische oder pneumatische Verstellzylinder zum Einsatz kommen (wahlweise auch elektrische o.ä. Antriebe), mit denen die Höheneinstellung ermöglicht ist. Bei ausreichender Baugröße der eingesetzten Zylinder und deren ausreichendem Durchmesser kann es ausreichen, mit zwei solchen parallel und synchron verstellbaren Zylindern eine ausreichend stabile verstellbare Aufhängung für die Schartrageinheit 30 zu schaffen.

Gemäß der Seitenansicht der Fig. 2 weist jeder der beiden Linearantriebe 36 der Linearführungseinheit 34 jeweils ein Tauchrohr 40 und ein darin in Längsrichtung mittels fluidischer Druckbeaufschlagung verschiebbares und in seiner Lage fixierbares Standrohr 42 auf. Typischerweise können die Tauchrohre 40 ortsfest und in definiertem Winkel ihrer Längsachse am Rahmen 14 der Verteilmaschine 10 fixiert sein.

Wahlweise können die Tauchrohre 40 auch jeweils in ihrer Neigung gegenüber der Vertikalen einstellbar und/oder in ihrer Höhenposition am Rahmen 14 der Verteilmaschine 10 justierbar und in der eingestellten Position feststellbar sein, wodurch eine flexiblere Einstellung und Variation der Verstellmöglichkeiten geschaffen ist, bspw. bei unterschiedlich dimensionierten Schareinheiten 18, wenn diese bspw. für unterschiedliches Verteilgut und/oder unterschiedliche Bodenverhältnisse oder Einsatzbedingungen auswechselbar sind.

Die beiden Standrohre 42 sind mit ihren jeweiligen unteren Befestigungen 44 mit der Schartrageinheit 30 verbunden und tragen diese höhenverstellbar und verbinden sie mit dem Rahmen 14 der Verteilmaschine 10. Gemäß der schematischen Seitenansichten der Fig. 4a und 4b können die Standrohre 42 wahlweise nach unten aus den Tauchrohren 40 herausgefahren sein, was einer tiefen Einstellung der Säschare 18 entspricht (Fig. 4a). Sie können jedoch auch nach oben in die Tauchrohre 40 eingezogen sein, was einer hohen Einstellung der Säschare 18 entspricht (Fig. 4b). Darüber hinaus sind auch alle dazwischen liegenden Einstellungen zwischen diesen beiden Endanschlägen möglich. Zudem kann die Schartrageinheit 30 mitsamt den daran befestigten Säscharen 18 auch während der Feldfahrt gehoben und abgesenkt werden, wenn die Arbeitstiefe variiert oder angepasst werden soll.

Zur Vorgabe eines Schardrucks kann an der Schartrageinheit 30 zusätzlich eine manuell betätigbare mechanisch Verstelleinrichtung 46 vorgesehen sein, mit der eine Grundeinstellung der Säscharen 18 gegenüber der Schartrageinheit 30 justiert und variiert werden kann, was ggf. auch automatisch möglich ist.

Die Säschare 18 selbst können in unterschiedlicher Weise ausgestaltet sein, bspw. als Scheibenschare wie gezeigt, bei denen jeweils in Längsrichtung versetzte Scharscheiben 48 an einem Scharträger 50 angeordnet sind, denen eine nachgeordnete Druckrolle 52 folgt. Die Saatleitung mündet hierbei normalerweise in einem Bereich zwischen den benachbarten, ggf. V-förmig zueinander angestellten Scharscheiben 48.

Wie es die Figuren 1 bis 4 erkennen lassen, ist im gezeigten Ausführungsbeispiel die Linearführungseinheit 34 solchermaßen orientiert, dass sie eine geneigt zur Vertikalen orientierte Verstellrichtung 38 aufweist. Darüber hinaus liegt diese Verstellrichtung 38 bzw. die Bewegungslinie der Verstellvorgänge für das Heben und Senken innerhalb einer vertikalen Ebene (nicht eingezeichnet), die parallel zur Vorschub- oder Fahrtrichtung 24 der Verteilmaschine 10 bzw. Sämaschine 12 angeordnet ist. Diese Ebene sowie die innerhalb dieser Ebene geneigte Verstellrichtung 38 definieren die Bewegungsrichtungen zur Höheneinstellung der Säschare 18 über die verstellbare bzw. heb- und senkbare Schartrageinrichtung 30.

Da weitere Aufhängungselemente neben der Linearführungseinheit 34 nicht erforderlich sind, ist lediglich sicherzustellen, dass diese ausreichend steif konstruiert ist und bei den in der Praxis auftretenden Belastungen ausreichend stabil gegen Verformungen und Durchbiegungen ist.

Grundsätzlich können anstelle der gezeigten Tauchrohre 40 auch nahezu beliebige Zylinder und anstelle der Standrohre 42 auch andere Kolbenbauarten eingesetzt werden. Auch ein umgekehrter Bewegungsaufbau ist möglich, bei dem die Standrohre 42 ortsfest am Rahmen 14 verankert sein können, während die relativ dazu beweglichen Taurohre 40 mit der Schartrageinheit 30 verbunden sein können.

### Bezugszeichenliste

- 10: Landwirtschaftliche Verteilmaschine
- 12: Sämaschine
- 14: Rahmen
- 16: Tank, Zentraltank
- 18: Säschar, Schareinheit
- 20: Sternverteiler
- 22: Wellrohr
- 24: Fahrtrichtung, Vorschubrichtung, Arbeitsrichtung
- 26: Zerkleinerungswelle
- 28: Zerkleinerungswerkzeug
- 30: Schartrageinrichtung, Schartrageinheit
- 32: Querrohr
- 33: Aufhängung
- 34: Linearführungseinheit
- 36: Linearantrieb
- 38: Verstellrichtung, Längsrichtung
- 40: Tauchrohr
- 42: Standrohr
- 44: Befestigung
- 46: Verstelleinrichtung
- 48: Scharscheibe
- 50: Scharträger
- 52: Druckrolle

## Patentansprüche

1. Landwirtschaftliche Verteilmaschine (10), insbesondere Sä- und/oder Drillmaschine (12), mit wenigstens einer zentralen Versorgungs- und Fördereinheit für das Verteil- oder Saatgut und einer Vielzahl von Säschare (18), die nebeneinander an wenigstens einer gemeinsamen, quer zu einer Vorschub- oder Fahrtrichtung (24) angeordneten Schartrageinrichtung (30) befestigt und förder- sowie materialflusstechnisch mit der wenigstens einen zentralen Versorgungs- und Fördereinheit gekoppelt sind, welche wenigstens eine Schartrageinrichtung (30) über eine höhenverstellbare Aufhängung (33) mit einem Rahmen (14) der Verteilmaschine (10) verbunden ist, wobei die höhenverstellbare Aufhängung (33) eine Linearführungseinheit (34) umfasst, die eine linear verstellbare Verbindung zwischen dem Rahmen (14) der Verteilmaschine (10) und der wenigstens einen Schartrageinrichtung (30) mit der Vielzahl von daran befestigten Säscharen (18) bildet, **dadurch gekennzeichnet, dass** die durch zwei Linearantriebe (36) gebildete Linearführungseinheit (34) das weitgehend alleine tragende Verbindungsteil zwischen dem Rahmen (14) der Verteilmaschine (10) und der wenigstens einen Schartrageinrichtung (30) bildet, wobei keine weiteren tragenden Verbindungsteile zwischen dem Rahmen (14) der Verteilmaschine (10) und der wenigstens einen Schartrageinrichtung (30) vorgesehen sind.

2. Landwirtschaftliche Verteilmaschine nach Anspruch 1, bei der die Linearführungseinheit (34) eine vertikal oder geneigt zur Vertikalen orientierte und innerhalb einer vertikalen, parallel zur Vorschub- oder Fahrtrichtung (24) der Verteilmaschine (10) angeordneten Ebene liegende Verstellrichtung (38) zur Höheneinstellung der Säschare (18) über die verstellbare bzw. heb- und senkbare Schartrageinrichtung (30) vorsieht.

3. Landwirtschaftliche Verteilmaschine nach Anspruch 1 oder 2, bei der die Linearführungseinheit (34) zwei Linearantriebe (36) umfasst, die mit in etwa parallelen Längserstreckungsrichtungen und jeweiligen Verstellrichtungen (38) zwischen dem Rahmen (14) der Verteilmaschine (10) und der Schartrageinrichtung (30) angeordnet sind und diese verstellbar miteinander verbinden.

4. Landwirtschaftliche Verteilmaschine nach einem der Ansprüche 1 bis 3, bei der jeder der zwei Linearantriebe (36) jeweils durch doppelt wirkende Zylinderantriebe gebildet ist, welche durch fluidische Druckbeaufschlagung in jeweiliger Längsrichtung (38) verstellbar sind.

5. Landwirtschaftliche Verteilmaschine nach einem der Ansprüche 1 bis 4, bei der jeder der zwei Linearantriebe (36) jeweils einen Zylinder und/oder ein Tauchrohr (40) und ein darin in Längsrichtung (38) mittels fluidischer Druckbeaufschlagung verschiebbares und in seiner Lage fixierbares Standrohr (42) bzw. einen beweglichen Kolben aufweist.

6. Landwirtschaftliche Verteilmaschine nach einem der Ansprüche 1 bis 4, bei der jeder der zwei Linearantriebe (36) jeweils einen Zylinder und/oder ein Tauchrohr (40) und ein darin in Längsrichtung (38) mittels elektrischer Antriebsenergie verschiebbares und in seiner Lage fixierbares Standrohr (42) bzw. einen beweglichen Kolben aufweist.

7. Landwirtschaftliche Verteilmaschine nach Anspruch 5 oder 6, bei der die Tauchrohre (40) bzw. Zylinder ortsfest und in definiertem Winkel ihrer Längsachse am Rahmen (14) der Verteilmaschine (10) fixiert sind.

8. Landwirtschaftliche Verteilmaschine nach einem der Ansprüche 5 bis 7, bei der die Tauchrohre (40) bzw. Zylinder jeweils in ihrer Neigung gegenüber der Vertikalen einstellbar und/oder in ihrer Höhenposition am Rahmen (14) der Verteilmaschine (10) justierbar und in der eingestellten Position feststellbar sind.

9. Landwirtschaftliche Verteilmaschine nach einem der Ansprüche 5 bis 8, bei der die zwei Standrohre (42) bzw. beweglichen Kolben mit ihren jeweiligen unteren Befestigungen (44) mit der Schartrageinheit (30) verbunden sind und diese höhenverstellbar tragen und mit dem Rahmen (14) der Verteilmaschine (10) verbinden.

10. Landwirtschaftliche Verteilmaschine nach einem der Ansprüche 1 bis 9, bei der die Positionen der Linearführungseinheit (34) und damit die Arbeitshöhe der Schartrageinheit (30) mit den daran angeordneten Säscharen (18) automatisch in Abhängigkeit von Arbeitsparametern und/oder erfassten Messwerten einstellbar sind.

11. Landwirtschaftliche Verteilmaschine nach einem der Ansprüche 1 bis 10, bei der die Schartrageinheit (30) durch wenigstens ein durchgängiges Querrohr (32) oder einen starren Querträger gebildet ist.

12. Verfahren zur gemeinsamen und gleichzeitigen Höhenverstellung einer Vielzahl von Säscharen (18), die nebeneinander an einer gemeinsamen, quer zu wenigstens einer Vorschub- oder Fahrtrichtung (24) angeordneten Schartrageinrichtung (30) einer landwirtschaftlichen Verteilmaschine (10), insbesondere einer Sä- und/oder Drillmaschine (12) befestigt sind, wobei die Säschare (18) jeweils mit wenigstens einer zentralen Versorgungs- und Fördereinheiteinheit für das Verteil- oder Saatgut förder- sowie materialflusstechnisch gekoppelt sind, wobei die wenigstens eine Schartrageinrichtung (30) über eine höhenverstellbare Aufhängung (33) mit einem Rahmen (14) der Verteilmaschine (10) verbunden ist, wobei die höhenverstellbare Aufhängung (33) wenigstens eine Linearführungseinheit (34) umfasst, die eine linear verstellbare Verbindung zwischen dem Rahmen (14) der Verteilmaschine (10) und der wenigstens einen Schartrageinrichtung (30) mit der Vielzahl von daran befestigten Säscharen (18) bildet, **dadurch gekennzeichnet, dass** die durch zwei Linearantriebe (36) gebildete Linearführungseinheit (34) das weitgehend alleine tragende Verbindungsteil zwischen dem Rahmen (14) der Verteilmaschine (10) und der wenigstens einen Schartrageinrichtung (30) bildet, wobei keine weiteren tragenden Verbindungsteile zwischen dem Rahmen (14) der Verteilmaschine (10) und der wenigstens einen Schartrageinrichtung (30) vorgesehen sind.

13. Verfahren nach Anspruch 12, bei dem die Linearführungseinheit (34) eine vertikal oder geneigt zur Vertikalen orientierte und innerhalb einer vertikalen, parallel zur Vorschub- oder Fahrtrichtung (24) der Verteilmaschine (10) angeordneten Ebene liegende Verstellrichtung (38) zur Höheneinstellung der Säschare (18) über die verstellbare bzw. heb- und senkbare Schartrageinrichtung (30) vorsieht.

14. Verfahren nach Anspruch 12 oder 13, bei dem die Positionen der Linearführungseinheit (34) und damit die Arbeitshöhe der Schartrageinheit (30) mit den daran angeordneten Säscharen (18) manuell oder automatisch in Abhängigkeit von Arbeitsparametern einstellbar sind.

## Claims

1. An agricultural distribution machine (10), in particular a seeder and/or seed drill (12), having at least one central supply and conveyor unit for the distribution goods or seeds and having a multitude of sowing coulters (18), which are fastened next to each other on at least one common share carrier device (30) arranged transverse to a feed or driving direction (24), and which are coupled in terms of material handling and material flow with the at least one central supply and conveyor unit, which at least one share carrier device (30) is connected to a frame (14) of the distribution machine (10) by way of a height-adjustable suspension (33), wherein the height-adjustable suspension (33) comprises a linear guide unit (34), which forms a linearly adjustable connection between the frame (14) of the distribution machine (10) and the at least one share carrier device (30) with the multitude of sowing coulters (18) fastened thereto, **characterised in that** the linear guide unit (34), which is formed by two linear actuators (36), forms the largely only load-bearing connection part between the frame (14) of the distribution machine (10) and the at least one share carrier device (30), wherein no further load-bearing connection parts between the frame (14) of the distribution machine (10) and the at least one share carrier device (30) are provided.

2. The agricultural distribution machine according to claim 1, in which the linear guide unit (34) provides an adjustment direction (38) for the height setting of the sowing coulters (18) by way of the adjustable or, as the case may be, liftable and lowerable share carrier device (30), the adjustment direction (38) being oriented vertically or inclined to the vertical and lying within a plane arranged vertically and parallel to the feed or driving direction (24) of the distribution machine (10).

3. The agricultural distribution machine according to claim 1 or 2, in which the linear guide unit (34) comprises two linear actuators (36), which are arranged with approximately parallel longitudinal extension directions and particular adjustment directions (38) between the frame (14) of the distribution machine (10) and the share carrier device (30), and which adjustably connect the said to each other.

4. The agricultural distribution machine according to one of the claims 1 to 3, in which each of the two linear actuators (36) is in each case formed by double-acting cylinder actuators, which are adjustable in the particular longitudinal direction (38) by fluidic pressurisation.

5. The agricultural distribution machine according to one of the claims 1 to 4, in which each of the two linear actuators (36) in each case has a cylinder and/or a slider tube (40) and a stanchion (42) slidable therein in longitudinal direction (38) by means of fluidic pressurisation and fixable in its position or, as the case may be, a movable piston.

6. The agricultural distribution machine according to one of the claims 1 to 4, in which each of the two linear actuators (36) in each case has a cylinder and/or a slider tube (40) and a stanchion (42) slidable therein in longitudinal direction (38) by means of electrical operating power and fixable in its position or, as the case may be, a movable piston.

7. The agricultural distribution machine according to claim 5 or 6, in which the sliding tubes (40) or cylinders, as the case may be, are fixed stationarily and at a specified angle of their longitudinal axis to the frame (14) of the distribution machine (10).

8. The agricultural distribution machine according to one of the claims 5 to 7, in which the sliding tubes (40) or cylinders, as the case may be, are in each case adjustable in their inclination in relation to the vertical, and/or adjustable in their height position at the frame (14) of the distribution machine (10), and locatable in the set position.

9. The agricultural distribution machine according to one of the claims 5 to 8, in which the two fixed tubes (42) or movable pistons, as the case may be, are connected to the share carrier unit (30) with their particular lower fastenings (44) and height-adjustably carry said share carrier unit (30) and connect it to the frame (14) of the distribution machine (10).

10. The agricultural distribution machine according to one of the claims 1 to 9, in which the positions of the linear guide unit (34) and therewith the working height of the share carrier unit (30) with the thereto arranged sowing coulters (18) are adjustable automatically based on working parameters and/or detected measured values.

11. The agricultural distribution machine according to one of the claims 1 to 10, in which the share carrier device (30) is formed by at least one continuous cross tube (32) or rigid crossbar.

12. A method for common and simultaneous height adjustment of a multitude of sowing coulters (18), which are fastened next to each other on a common share carrier device (30) of an agricultural distribution machine (10), in particular of a seeder and/or seed drill (12), the share carrier device (30) being arranged transverse to at least one feed or driving direction (24), wherein the sowing coulters (18) are each coupled in terms of material handling and material flow with at least one central supply and conveyor unit for the distribution goods or seeds, wherein the at least one share carrier device (30) is connected to a frame (14) of the distribution machine (10) by way of a height-adjustable suspension (33), wherein the height-adjustable suspension (33) comprises at least one linear guide unit (34), which forms a linearly adjustable connection between the frame (14) of the distribution machine (10) and the at least one share carrier device (30) with the multitude of sowing coulters (18) fastened thereto, **characterised in that** the linear guide unit (34), which is formed by two linear actuators (36), forms the largely only load-bearing connection part between the frame (14) of the distribution machine (10) and the at least one share carrier device (30), wherein no further load-bearing connection parts between the frame (14) of the distribution machine (10) and the at least one share carrier device (30) are provided.

13. The method according to claim 12, in which the linear guide unit (34) provides an adjustment direction (38) for the height setting of the sowing coulters (18) by way of the adjustable or, as the case may be, liftable and lowerable share carrier device (30), the adjustment direction (38) being oriented vertically or inclined to the vertical and lying within a plane arranged vertically and parallel to the feed or driving direction (24) of the distribution machine (10).

14. The method according to claim 12 or 13, in which the positions of the linear guide unit (34) and therewith the working height of the share carrier unit (30) with the thereto arranged sowing coulters (18) are adjustable manually or automatically based on working parameters.

## Revendications

1. Épandeur agricole (10), notamment machine d'ensemencement et/ou semoir (12), doté d'au moins une unité centrale d'approvisionnement et de convoyage des produits à épandre ou semences et d'une pluralité de socs de semeur (18) qui sont fixés l'un à côté de l'autre à au moins un dispositif support de socs (30) commun agencé à la transversale d'un sens d'avancement ou de marche (24), et solidarisés, en termes de convoyage et de flux de matière, à ladite au moins une unité centrale d'approvisionnement et de convoyage, ledit au moins un dispositif support de socs (30) est relié par un organe de suspension (33) réglable en hauteur à un châssis (14) de l'épandeur (10), ledit organe de suspension (33) réglable en hauteur comprenant une unité de conduite linéaire (34) qui constitue une liaison réglable de manière linéaire entre ledit châssis (14) de l'épandeur (10) et ledit au moins un dispositif support de socs (30), avec ladite pluralité des socs de semeur (18) qui y sont fixés, **caractérisé en ce que** l'unité de conduite linéaire (34) constituée par deux entraînements linéaires (36) constitue la principalement seule pièce de liaison porteuse entre le châssis (14) de l'épandeur (10) et ledit au moins un dispositif support de socs (30), aucune autre pièce de liaison porteuse entre le châssis (14) de l'épandeur (10) et ledit au moins un dispositif support de socs (30) n'étant prévue.

2. Épandeur agricole selon la revendication 1, dans lequel l'unité de conduite linéaire (34) prévoit une direction de réglage (38), orientée à la verticale ou tendant à la verticale et située dans un plan vertical agencé parallèlement au sens d'avancement ou de marche (24) de l'épandeur (10), pour le réglage en hauteur des socs de semeur (18) par le biais du dispositif support de socs (30) réglable, soit relevable ou rabaissable.

3. Épandeur agricole selon la revendication 1 ou 2, dans lequel l'unité de direction linéaire (34) comprend deux entraînements linéaires (36) qui sont agencés, avec des sens d'étendue longitudinale approximativement parallèles et des sens de réglage (38) respectifs, entre le châssis (14) de l'épandeur (10) et le dispositif support de socs (30) et relient ces derniers l'un à l'autre de manière réglable.

4. Épandeur agricole selon l'une quelconque des revendications 1 à 3, dans lequel chacun des deux entraînements linéaires (36) est respectivement constitué d'entraînements de cylindre à double action qui sont réglables en longueur respective (38) par application d'une contrainte de pression fluidique.

5. Épandeur agricole selon l'une quelconque des revendications 1 à 4, dans lequel chacun des deux entraînements linéaires (36) présente respectivement un cylindre et/ou un tube plongeur (40) et un tube montant (42), qui peut y être déplacé dans le sens de la longueur (38) par application d'une contrainte de pression fluidique et être fixé dans sa position, ou un piston mobile.

6. Épandeur agricole selon l'une quelconque des revendications 1 à 4, dans lequel chacun des deux entraînements linéaires (36) présente respectivement un cylindre et/ou un tube plongeur (40) et un tube montant (42), qui peut y être déplacé dans le sens de la longueur (38) au moyen d'énergie d'entraînement électrique et être fixé dans sa position, ou un piston mobile.

7. Épandeur agricole selon la revendication 5 ou 6, dans lequel les tubes plongeurs (40) ou cylindres sont fixés, à emplacement fixe et dans un angle donné de leur axe longitudinal, au châssis (14) de l'épandeur (10).

8. Épandeur agricole selon l'une quelconque des revendications 5 à 7, dans lequel les tubes plongeurs (40) ou cylindres peuvent être respectivement réglés dans leur inclinaison par rapport à la verticale et/ou ajustés dans leur position en hauteur sur le châssis (14) de l'épandeur (10) et bloqués dans la position réglée.

9. Épandeur agricole selon l'une quelconque des revendications 5 à 8, dans lequel les deux tubes plongeurs (42) ou pistons mobiles sont reliés, au moyen de leurs fixations inférieures (44) respectives, à l'unité support de socs (30) et portent celle-ci de manière réglable en hauteur, et la relient au châssis (14) de l'épandeur (10).

10. Épandeur agricole selon l'une quelconque des revendications 1 à 9, dans lequel les positions de l'unité de conduite linéaire (34), et donc la hauteur de travail de l'unité support de socs (30) avec les socs de semeur (18) qui y sont agencés, sont réglables de manière automatique en fonction de paramètres de travail et/ou de valeurs de mesure détectées.

11. Épandeur agricole selon l'une quelconque des revendications 1 à 10, dans lequel l'unité support de socs (30) est constituée d'au moins un tube transversal (32) continu ou d'une barre transversale rigide.

12. Procédé de réglage en hauteur collectif et simultané d'une pluralité de socs de semeur (18) qui sont fixés l'un à côté de l'autre à un dispositif support de socs (30) commun, agencé à la transversale d'au moins un sens d'avancement ou de marche (24), d'un épandeur agricole (10), notamment d'une machine d'ensemencement et/ou semoir (12), les socs de semeur (18) étant respectivement solidarisés, en termes de convoyage et de flux de matière, à une unité centrale de convoyage et d'approvisionnement pour les produits à épandre ou semences, ledit au moins un dispositif support de socs (30) étant relié par un organe de suspension (33) réglable en hauteur à un châssis (14) de l'épandeur (10), ledit organe de suspension (33) réglable en hauteur comprenant au moins une unité de conduite linéaire (34) qui constitue une liaison réglable de manière linéaire entre le châssis (14) de l'épandeur (10) et l'au moins un dispositif support de socs (30), à la pluralité de socs de semeurs (18) qui y sont fixés, **caractérisé en ce que** l'unité de conduite linéaire (34) constituée par deux entraînements linéaires (36) constitue la principalement seule pièce de liaison porteuse entre le châssis (14) de l'épandeur (10) et l'au moins un dispositif support de socs (30), aucune autre pièce de liaison porteuse n'étant prévue entre le châssis (14) de l'épandeur (10) et l'au moins un dispositif support de socs (30).

13. Procédé selon la revendication 12, dans lequel l'unité de conduite linéaire (34) prévoit une direction de réglage (38), orientée à la verticale ou tendant à la verticale et située dans un plan vertical agencé parallèlement au sens d'avancement ou de marche (24) de l'épandeur (10), pour le réglage en hauteur des socs de semeur (18) par le biais du dispositif support de socs (30) réglable, soit relevable ou rabaissable.

14. Procédé selon la revendication 12 ou 13, dans lequel les positions de l'unité de conduite linéaire (34), et donc la hauteur de travail de l'unité support de socs (30) avec les socs de semeur (18) qui y sont agencés, sont réglables manuellement ou automatiquement en fonction de paramètres de travail.
